# EUROPEAN PATENT SPECIFICATION

(11) **EP 3 089 837 B1**
(45) Date of publication and mention of the grant of the patent: **15.11.2017**
(21) Application number: 15703886.0
(22) Date of filing: 02.01.2015
(51) Int. Cl.: B21D 28/06, B21D 28/16, B21D 53/14, F16G 5/16

(54) **FINE-BLANKING DEVICE**
FEINSTANZVORRICHTUNG
DISPOSITIF DE DÉCOUPAGE FIN

(30) Priority: 02.01.2014 NL 1040584
(43) Date of publication of application: 09.11.2016
(73) Proprietor: Robert Bosch GmbH, 70442 Stuttgart (DE)
(72) Inventor: VAN DEN HEUVEL, Robert, NL-5000 AM Tilburg (NL)
(74) Representative: Plevier, Gabriel Anton Johan Maria
(86) International application number: PCT/EP2015/050002
(87) International publication number: WO 2015/101658

(56) References cited:
- EP-A1- 1 692 414
- EP-A1- 2 399 690
- JP-A- 2005 028 415

## Description

The present disclosure relates to a fine-blanking device according to the preamble of claim 1 for the fine blanking of transverse segments for a specific type of drive belt for a continuously variable transmission, which type of drive belt is known as a pushbelt. Such a device is disclosed in EP-A-2399690.

The pushbelt is provided with at least one endless carrier element, which typically comprises a set of mutually nested, flat and flexible metal rings, and a number of transverse segments that are incorporated in the pushbelt in an essentially continuous row along the circumference of the endless carrier element. At least as seen in a height direction thereof, which direction generally corresponds to a radial direction of the drive belt, the transverse segments are asymmetrically shaped. In particular, although by no means necessarily, and is seen in front elevation, the transverse segments are provided with a predominantly trapezoidal bottom part, a predominantly rectangular middle part and a predominantly triangular top part. This type of drive belt is generally known.

Furthermore, from the European Patent publication No. EP-1692414-A1 a manufacturing process is known for forming, i.e. for shaping and cutting the transverse elements out of a strip of basic material. This particular forming process is known as a fine-blanking process. The fine-blanking process and device are distinguishable by the use of a relatively small cutting clearance between a blanking die and a cutting punch, as well as by the use of the counter punch that is placed against the strip on the opposite side thereof relative to the cutting punch. During the actual blanking of the transverse element, the cutting punch and the counter punch exert a significant pressure on a part of the strip of basic material that will become the transverse element, while they are moved in unison in the thickness direction of the strip relative to surrounding parts of the strip that are fixed by being clamped between the blanking die and a blank holder. After the transverse element has thus been separated from the said surrounding parts of the strip, it is removed from the fine-blanking device. Also, the strip of basic material is advanced relative to the fine-blanking device to renew the basic material in-between the cutting punch and the counter punch.

Such known fine-blanking process and device are applied not only to provide the transverse segments with a relatively smoothly and precisely cut circumference surface, but also to simultaneously shape and calibrate the main body surfaces of the transverse segments with high accuracy. In particular in this latter respect, a convex curvature is applied to a part of one of the main body surface of the transverse segment. This convexly curved surface part serves to allow the adjacent transverse segments in the drive belt to rotate relative to one another while remaining in mutual contact and is often denoted the rocking edge.

To improve the production rate of the fine-blanking device it is known to include multiple blanking stations therein, which blanking stations each include a cutting punch and a counter punch. The blanking stations of the fine-blanking device are jointly operated, whereby for every blanking stroke of the fine-blanking device, a number of transverse segments is formed, i.e. is fine-blanked, which number of transverse segments corresponds to the number of blanking stations of the device. Obviously, several blanking stations of the fine-blanking device can be arranged in parallel, mutually separated in the width direction of the strip of basic material, provided of course that the strip is wide enough to accommodate these blanking stations and/or that two or strips strip of basic material are supplied to the blanking stations in parallel, e.g. one strip for each pair of two adjacent blanking stations, i.e. 4 strips in total. Alternatively, several such blanking stations can be arranged in series along the length of the strip of basic material, provided of course that after each blanking stroke the strip of basic material is advanced over a distance corresponding to the number of blanking stations arranged in series.

In EP-1692414-A1 two examples of a specific arrangement of four blanking stations of a fine-blanking device are discussed. In a first arrangement of the four blanking stations an amount of basic material required to form the transverse segments is minimised, whereas in a second arrangement thereof, the shape and/or size accuracy of the fine-blanked transverse segments is maximised. In this latter, second known arrangement the blanking stations are provided in two pairs whereof the blanking stations are oriented in a mutually mirrored position relative to a centre line of strip of basic material. This particular arrangement has the advantage that lateral forces that are exerted on the strip mutually counteract one another between the said mutually mirrored blanking stations.

The yield per blanking stroke of the known fine-blanking device is limited by the said four stations thereof, i.e. four transverse segments are produced/formed/fine-blanked per blanking stroke of the fine-blanking device. Furthermore, it is noted that the blanking stroke rate of the fine-blanking device, as for example expressed by the number of blanking strokes performed thereby per minute, is limited as well. In particular, after the transfer segment is cut from the basic material and is shaped between the cutting punch and the counter punch, it still needs to be removed from inside the fine-blanking device, whereto:
- the cutting punch and the blank holder are separated from the counter punch and the blanking die respectively,
- the counter punch is raised relative to beyond the blanking die and
- the transverse segment is taken-off of the counter punch and placed outside the fine-blanking device.

For this last step, it is known to apply of flow of (compressed) air to blow the transverse segment away from the counter punch, or to apply a magnetic pickup that is moved in and out of the fine-blanking device in coordination with the opening and closing thereof. In any case, these operating steps for removing the transverse segment from the fine-blanking device are a limiting factor for (further) increasing the stroke rate thereof.

Further known examples of such mutual arrangements of several blanking stations are provided by EP 2 399 690 A1 and by JP 2005 028415 A. EP 2 399 690 A1 discloses the arrangement of eight blanking stations divided into two groups of four blanking stations, which groups are mutually separated in the length direction of the basic material and the four blanking stations of which groups are mutually separated in the width direction of the basic material. In this particular known arrangement, the basic material is supplied to the blanking stations in two parallel strips that are mutually separated by guiding elements. JP 2005 028415 A3 discloses arrangements of two, four, six, seven and eight blanking stations respectively. In these particular known arrangements, the blanking stations are mutually separated in the width of a single strip of basic material of sufficient width.

The present disclosure aims to improve upon the known fine-blanking device and the known fine-blanking process in particular in terms of the production rate thereof and specifically in relation to the fine-blanking of the transverse segment component of the drive belt. According to the present disclosure, such aim is realised in the fine-blanking device in accordance with the claim 1 hereinafter. Such novel fine-blanking device includes eight blanking stations that are each provided with mutually cooperating cutting and counter punches and that are arranged in a specific mutual pattern that favours the accuracy and the consistency of the size and shape of all eight of the fine-blanked transverse segments that are formed in a single stroke of such fine-blanking device. Obviously, such novel fine-blanking device will have a considerably -ideally up to two times- higher production rate than the known fine-blanking device including only four blanking stages. However, a further aspect of the novel fine-blanking device is that it combines the advantageous features of a high utilisation ratio of the basic material and of a high degree of shape accuracy and consistency in relation to the shape of the transverse segments. These advantageous features, although known as such, could only be realised in two mutually different arrangements of the known fine-blanking device.

In accordance with the present disclosure, the eight blanking stations are provided in four parallel rows of two blanking stations each, wherein:
- the two blanking stations of the two outermost of the four parallel rows are positioned opposite one another between these rows relative to the direction of advancement of the basic material, i.e. relative to a centre line of the basic material;
- the two blanking stations of the two innermost most of the four parallel rows are positioned opposite one another between these rows relative to the direction of advancement of the basic material; and wherein
- the four blanking stations of the two outermost rows are offset in the direction of advancement of the basic material relative to the four blanking stations of the two innermost rows.

The above arrangement of the eight blanking stations combines the advantages of a high utilisation ratio of the basic material, a high degree of shape accuracy and consistency in relation to the shape of the transverse segments and a high production rate or yield of eight transverse segments per blanking stroke.

Preferably in the above arrangement, the blanking stations of the outermost rows and the innermost rows are not only positioned opposite one another between the respective rows, but are mirrored relative to the direction of advancement of the basic material, i.e. are each other's mirror image.

Preferably in the above arrangement, the two blanking stations of each row are not placed immediately adjacent to one another, but are separated by a width of two blanking positions in the basic material, i.e. positions where transverse segments have been or will be blanked from the basic material. This latter feature enables that these blanking positions can be closer together, because the space required by a blanking station is larger than the transverse segment to be formed therewith, i.e. is larger than a minimum size of a blanking positions. Hereby, the available basic material is used more effectively.

A similar consideration is applicable to the mutual placement of the blanking stations of the said outermost rows thereof and those of the said innermost rows. Although these blanking stations could, in principle, be placed mutually offset by only half the width of a blanking position, these blanking position can in fact be closer together if such mutual offset corresponds to at least one and a half times the width of a blanking position, whereby (the construction of) a blanking station associated with a specific blanking position can also take up the space above immediately neighbouring blanking positions.

It is noted that either one of the above novel arrangement of eight blanking stations can be supplied with a single, broad strip of basic material or with two strips of basic material in parallel, which two strips would then have approximately the same width as the width that is used in the conventional arrangement of four blanking stations.

The present disclosure furthermore addresses the removal of the transverse segments from the fine-blanking device. As mentioned hereinabove such removal put a limit on the blanking stroke rate that is achievable by the fine-blanking device. According to the present disclosure, the transverse element is not removed immediately after it has been blanked, but instead is first transported together with the basic material to outside the respective blanking station and only then is removed in one of eight removal stations of the fine-blanking device, each such removal station being associated with a respective blanking station. Preferably in this latter arrangement of the fine-blanking, the transverse segment is not completely cut loose from the basic material in the blanking station, but instead a connecting tab is left between the circumference of such transverse segment and the basic material to facilitate the transport thereof by the advancement of the basic material relative to the fine-blanking device. This connecting tab is then severed in the removal station to free the transverse segment from the basic material, for example by a removal punch of the removal station.

In the following, a more detailed explained is provided by way of example and with reference to the drawing figures, whereof:
figure 1 is a front view of a transverse segment for a drive belt for a continuously variable transmission;
figure 2 is a side view of the transverse segment which is shown in figure 2;
figure 3 diagrammatically depicts, in the form of a cross section, a blanking station of a fine-blanking device with a basic material being inserted therein;
figure 4 diagrammatically illustrates the basic operation of the blanking station;
figure 5 illustrates a first known arrangement of four blanking stations in a fine-blanking device for blanking transverse segments of a drive belt on the basis of a plan view of a strip of basic material that used in such fine-blanking device;
figure 6 illustrates a second known arrangement of four blanking stations in a fine-blanking device for blanking transverse segments of a drive belt on the basis of a plan view of a strip of basic material that used in such fine-blanking device;
figure 7 illustrates a novel arrangement of eight blanking stations of a fine-blanking device for the blanking of transverse segments of a drive belt on the basis of a plan view of a strip of basic material that used in such fine-blanking device; and
figure 8 illustrates a novel fine-blanking device including eight blanking stations and eight removal station, likewise for the blanking of transverse segments of a drive belt and likewise on the basis of a plan view of a strip of basic material that used in such fine-blanking device.

Throughout the figures, corresponding structural elements are denoted by identical reference numerals.

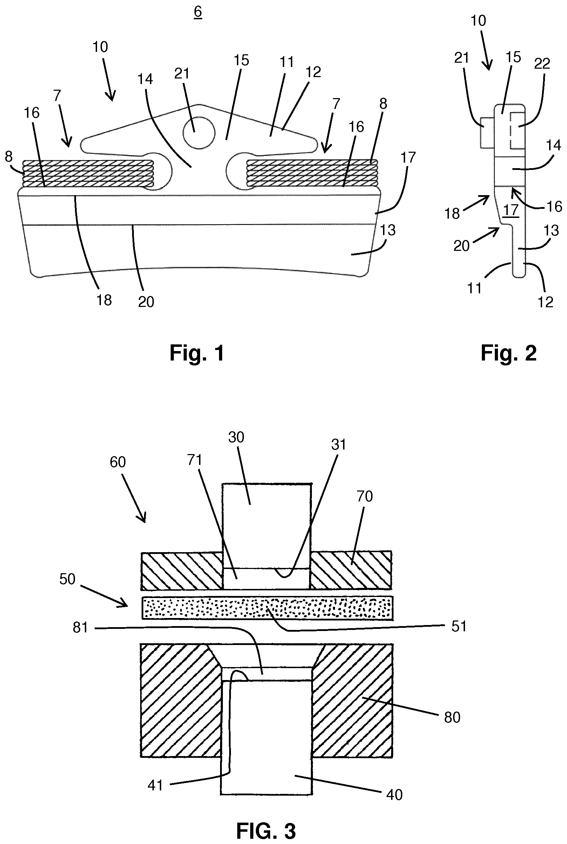

Figure 1 represents a cross-section of a known type of drive belt 6 that is suitable and intended for use in a continuously variable transmission, wherein the drive belt 6 will be wrapped around two variable pulleys while being clamped between and in friction contact with the pulley sheaves thereof for transmitting a driving power between these pulleys. The known drive belt 6 comprises two endless carriers 7 that are composed of a bundle of a number of mutually nested continuous bands or rings 8. Transverse segments 10 are arranged on the carriers 7 forming an essentially contiguous row along the entire circumference thereof. The transverse segments 10 are provided movable with respect to the endless carriers 7, at least in the circumference direction thereof. In figure 2 a side elevation of the transverse segment 10 is provided.

In the vertical direction in figures 1 and 2, which vertical direction corresponds to the radial direction of the drive belt 6 when placed in a circular posture outside the transmission, the transverse segment 10 successively comprises a base portion 13 of predominantly trapezoidal shape, a relatively narrow middle portion 14 and a top portion 15 of predominantly triangular shape. In the drive belt 6, the carriers 7 thereof are located on either side of the middle portion 14, i.e. in-between the base portion 13 and the top portion 15 of transverse segment 10.

A circumference surface 16, 17 of the base portion 13 of the transverse segment 10 comprises two supporting surfaces 16, one on either side of the middle portion 14, that each serve to support a respective one of the two endless carriers 7 in radial outward direction. Furthermore, the circumference surface 16, 17 of the base portion 13 includes two contacting surfaces 17, one on either axial side of the transverse element 10, that each serve to contact a sheave of the pulleys 4, 5 when the transverse segment 10 moves over it.

A front main surface of the transverse segment 10 is indicated in general by the reference sign 11, whereas a back main surface of the transverse segment 10 is indicated in general by the reference sign 12. At the front main surface 11 in the base portion 13 of the transverse segment 10, a tilting edge 18 is defined. The tilting edge 18 is represented by a convexly curved area of the front main surface 11, which area separates two portions of the said front main surface 11 that are oriented at an angle relative to one other, and extends along the entire (axial) width of the transverse segment 10. The tilting edge 18 is located close to, but still at some distance below, i.e. radially inward from, the supporting surfaces 16. An important function of the tilting edge 18 is to provide a mutual pushing contact between the adjacent transverse segments 10, when said transverse segments 10 are in a tilted position relative to one another at the pulleys 4, 5.

At some distance below the tilting edge 18, i.e. also in the base portion 13 of the transverse segment 10, a step 20 is defined in the front main surface 11 thereof. The step 20 represents a local, i.e. stepwise change of the thickness of the transverse segment 10. Just below such step 20 the thickness of the transverse segment is thus less than just above it.

Also, at the front main surface 11 of the transverse segment 10, a projection 21 is provided. In the shown example, the projection 21 is arranged in the top portion 15, and corresponds in position to a slightly larger hole provided in the rear main surface 12. In figure 2, the hole is depicted by means of dashed lines and indicated by the reference sign 22. In the drive belt 6, the projection 21 of the transverse segment 10 is at least partially located inside the hole 22 of an adjacent transverse segment 10. The projection 21 and the corresponding hole 22 serve to prevent or at least limit mutual displacement of adjacent transverse segments 10 in a plane perpendicular to the circumference direction of the drive belt 6.

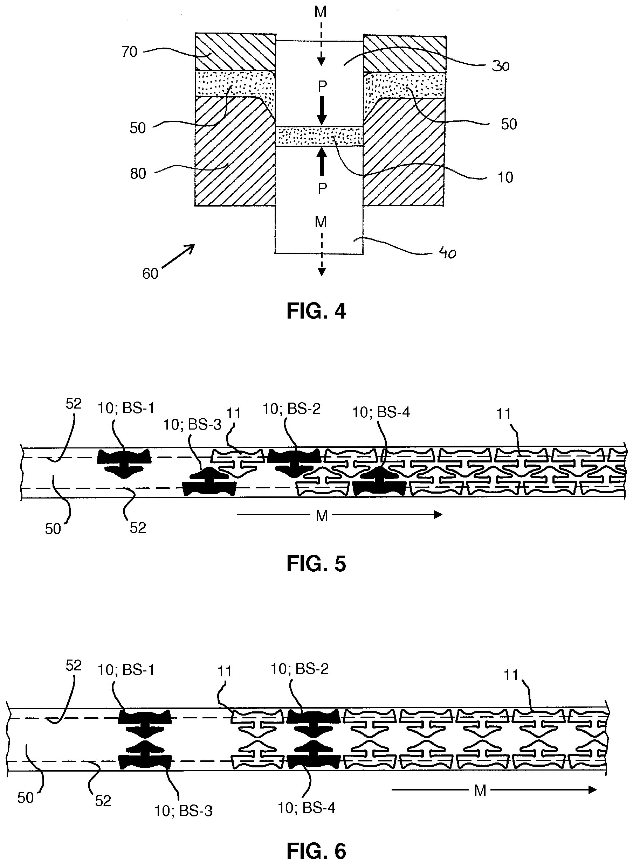

The transverse segment 10 is typically cut and shaped out of plate-shaped basic material 50 in a blanking process by means of a fine-blanking device 60. In figures 3 and 4, the fine-blanking device 60 and the basic material 50 are diagrammatically illustrated in a cross-section thereof. In the fine-blanking device 60 a cutting punch 30, a counter punch 40, a blank holder 70 and a blanking die 80 are applied. The blank holder 70 and the blanking die 80 serve both to clamp the basic material 50 between them and to contain the cutting punch 30 and the counter punch 40 in respective guiding spaces 71, 81 thereof. The part 51 of the basic material 50 that is located between the cutting punch 30 and the counter punch 40 is destined to become the transverse segment 10.

During the actual cutting, the bottom or working surface 31 of the cutting punch 30 and a top or working surface 41 of the counter punch 40 are pressed against the basic material 50, at mutually opposite sides thereof, and the cutting punch 30 and the counter punch 40 are pushed in unison completely through the basic material 50 in the general direction from the cutting punch 30 to the counter punch 40 cutting out the transverse segment 10, as is illustrated in figure 4.

The solid arrows P in figure 4 represent the pressure that is exerted between the cutting punch 30 and the counter punch 40 on the basic material 50 during the blanking of the transverse segment 10, by which pressure the main surfaces 11, 12 of the transverse segment 10 are shaped. Additionally, the cutting punch 30 and the counter punch 40 are also moved in unison relative to, in particular, the blanking die 80, as indicated by the dashed arrows M, such that the basic material 50 is pierced by the cutting punch 30 to cut out the transverse segment 10 there from. Accordingly, the said working surfaces 31, 41 have an outline that substantially corresponds to the outer contour of the transverse segment 10 and, furthermore, have a surface contour that corresponds to the contour of the main surface 11, 12 of the transverse segment 10 that is respectively shaped thereby.

Although in figures 2 and 3 only a single set of the cutting punch 30 and a counter punch 40 is shown, it is common practice to include several such sets, denoted blanking stations hereinafter, in a single fine-blanking device 60 to increase the yield thereof, i.e. to simultaneously obtain several products 51 or transverse segments 10 in a single blanking stroke. In figure 5 a typical arrangement of four such blanking stations BS1-4 is illustrated by way of a plan view of the basic material 50 with the simultaneously formed transverse segments 10 marked therein in black. In figure 5 the outlined contours 11 mark the positions of the transverse segments 10 that have already been blanked out of the strip 50 in previous blanking strokes. Also in figure 5 the dashed lines 52 represent a thickness step that is provided in the strip 50 and that corresponds to and thus predefines the step 20 defined in the front main surface 11 of the transverse segment 10.

In figure 5 the four blanking stations BS1-4 are provided in two rows including two blanking stations BS1-2, BS3-4 each. Thus, after each blanking stroke of the fine-blanking device 60, the basic material 50 is advanced to the right (as indicated by arrow M) over a distance that corresponds to two thirds of the distance between the two blanking stations BS1-2, BS3-4 in a respective row thereof. In the arrangement of figure 5, the two blanking stations BS1-2, BS3-4 in each row are offset relative to one another in the direction of advancement M of the basic material, whereby these two rows BS1-2, BS3-4 of blanking stations can overlap to a certain extend in the width direction of the basic material 50, i.e. perpendicular to the said advancement direction M thereof. In this manner optimal use is made of the basic material 50, in particular in relation to the shape of the transverse elements 10 whereof the top portions 15 that are less wide than the bottom portions 13 thereof.

In figure 6 an alternative known arrangement of four blanking stations BS1-4 is illustrated, also by way of a plan view of the basic material 50 with the simultaneously formed transverse segments 10 marked therein in black. Just like in figure 5 the four blanking stations BS1-4 of figure 6 are provided in two rows including two blanking stations BS1-2, BS3-4 each. However, in this particular arrangement of the blanking stations BS1-4, the two blanking stations BS1-2, BS3-4 are positioned opposite one another in the direction of advancement M of the basic material, i.e. are mirrored relative to a centre line of the basic material 50. In this manner, the forces that are exerted by, in particular, the cutting punch 30 in the width direction of the basic material 50 cancel each other out between the opposite blanking stations BS1 and BS3 and BS2 and BS4 respectively. Hereby, an optimal shape and/or size accuracy of the fine-blanked transverse segments 10 can be obtained.

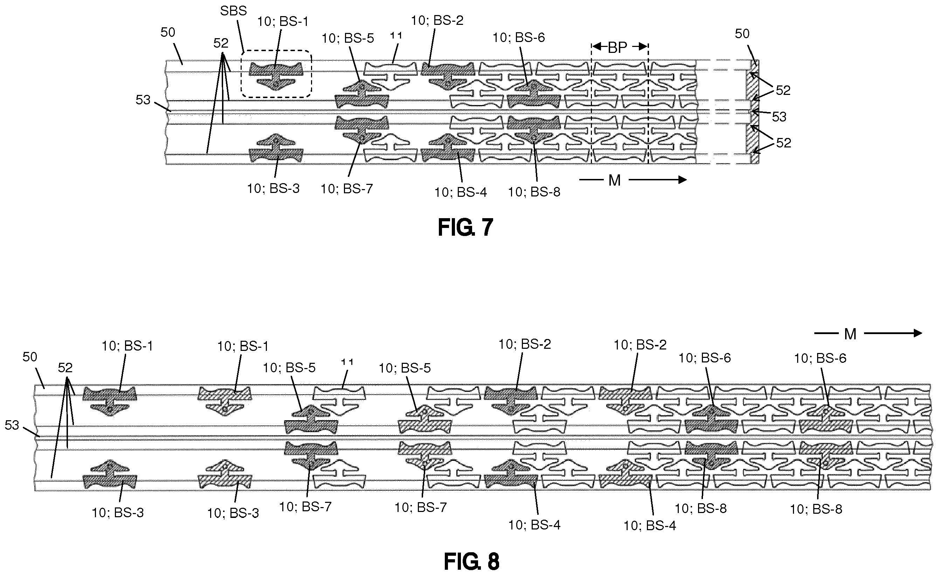

In figure 7 the novel arrangement of eight stations BS1-8 in accordance with the present disclosure is illustrated, also by way of a plan view of the basic material 50 with the simultaneously formed transverse segments 10 marked therein by hatching. The eight blanking stations BS1-8 are provided in four parallel rows of two blanking stations each. The blanking stations BS1-4 of the two outermost of these four parallel rows are positioned opposite one another relative to the direction of advancement M of the basic material 50, i.e. are mirrored relative to a centre line of the basic material 50. Also, the blanking stations BS3-BS6 of the two innermost of these four parallel rows are positioned opposite one another relative the centre line of the basic material 50. The four blanking stations BS1-4 of the two outermost rows are offset in the direction of advancement M of the basic material 50 relative to the four blanking stations BS5-8 of the two innermost rows. This novel arrangement of the eight blanking stations BS1-8 combines the advantages of a high utilisation ratio of the basic material 50, a high degree of shape accuracy and consistency in relation to the shape of the transverse segments 10 and a high production rate or yield of eight transverse segments 10 per blanking stroke.

Furthermore, in the arrangement of the eight blanking stations BS1-8 of the novel blanking device 60 of figure 7, the two blanking stations in each row, i.e. blanking stations BS1 and BS2, BS3 and BS4, BS5 and BS6 and BS7 and BS8 respectively, are not placed immediately adjacent to one another in the direction of advancement M of the basic material 50, but are mutually separated by twice a width BP of a blanking position in the basic material, i.e. by twice a length of the basic material 50 that is effectively required to blank each individual transverse segment 10 there from. As a result hereof, a space SBS that is available for each respective blanking station BS1-8 is favourably larger than the size of such blanking position, at least in terms of the said width BP thereof. Also for this reason, the blanking stations BS1-4 of the said outermost rows and the blanking stations BS5-8 of the said innermost rows offset relative to one another in the direction of advancement M of the basic material 50 by one and a half times the width BP of a blanking position.

Furthermore, to the right of figure 7, the cross-sectional, i.e. thickness profile of the basic material 50 is illustrated. The basic material 50 is shown to be provided with four steps 52 in its thickness, each such step 52 predefining the step 20 in the front main surface 11 of the transverse segments 10 and being related to a respective one of the said four rows of two blanking stations each of the novel blanking device 60. However, additionally and in accordance with the present disclosure, the basic material 50 is provided with a marker 53 in the form of a ridge 53 that extends in the said direction of advancement M thereof and that can be used by the blanking device 60, in particular by strip alignment means thereof, to align, in particular to centre, the basic material 50 relative to the said blanking stations BS1-8 thereof. Alternative markers 53 that can be applied to the basic material 50 are easily envisioned in this respect, such as a gulley or even holes extending through the thickness of the basic material 50. These markers 53 are preferably provided on the centre line of the basic material 50, because at this location the basic material 50 remains unused, since the blanking stations BS5 and BS7, respectively BS6 and BS8 of the two innermost rows of blanking stations BS5-8 are placed directly opposite one another on either side of the centre line of the basic material and since these respectively oppositely placed blanking stations BS5-8 require more space SBS than a minimum size of the blanking positions that are respectively associated therewith.

In figure 8 an alternative embodiment of the arrangement of eight stations BS1-8 in accordance with the present disclosure is illustrated, also by way of a plan view of the basic material 50. In this case too, the blanking device 60 is provided with eight blanking stations BS1-8 arranged in four parallel rows of two blanking stations each, as indicated by transverse segments 10 marked by the dense hatching. However, in this alternative embodiment, the blanking device 60 also includes eight removal stations RS1-8, each removal station RS1-8 being associated with a respective blanking station BS1-8. In this latter blanking device, the transverse elements 10 are not removed immediately after they have been blanked by/at the respective blanking stations BS1-8, but instead these transverse elements 10 are transported together with the basic material 50 in the said direction of advancement M thereof to the removal stations RS1-8 of the fine-blanking device. As shown in figure 8, the removal stations RS1-8 are preferably interposed between the blanking stations BS1-8 in the said direction of advancement M of the basic material 50 to favourably minimise the distance along which the transverse elements 10 are transported together with the basic material 50.

It is noted that in figure 7 and 8 the novel arrangements of eight blanking stations BS1-8 are illustrated in relation to a single strip of basic material 50. However within the context and scope of the present disclosure it is equally possible to apply two parallel strips of basic material. A first of such parallel strips would then be supplied to a first set of four blanking stations BS1, BS2, BS5 and BS6 and a second of such parallel strips would be supplied to a second set of (the remaining) four blanking stations BS3, BS4, BS7 and BS8.

## Claims

1. Fine blanking device (60) comprising eight blanking stations (BS1-8) for the fine blanking of transverse segments (10) from basic material (50) for a drive belt (6), such as applied in a continuously variable transmission, whereof each blanking station (BS1-8) is at least provided with a cutting punch (30), with an oppositely placed counter punch (40) and with a blanking die (80) wherein at least the counter punch (40) is contained, which blanking stations (BS1-8) are provided in four, mutually parallel rows that each contain two of the eight blanking stations (BS1-8), whereof the two blanking stations (BS1, BS2) of one of the two outermost rows of the said four rows are provided opposite the two blanking stations (BS3, BS4) of the other one of the two outermost rows of the said four rows and whereof the two blanking stations (BS5, BS6) of one of the two innermost rows of the said four rows are provided opposite the two blanking stations (BS7, BS8) of the other one of the two innermost rows of the said four rows, **characterised in that** the four blanking stations (BS1-4) of the two outermost rows of the said four rows and the four blanking stations (BS5-8) of the two innermost rows of the said four rows are provided with a mutual off-set in the longitudinal direction of the said four rows.

2. The fine blanking device (60) according to the claim 1, **characterized in that** the transverse segments (10) to be formed thereby are shaped asymmetrically in a direction perpendicular to the longitudinal direction of the said four rows and **in that** respective pairs of oppositely provided blanking stations are also provided in a mutually mirrored orientation.

3. The fine blanking device (60) according to the claim 1 or 2, **characterized in that** each set of two blanking stations (BS1, BS2; resp. B3, B4) of one of the two outermost rows of the said four rows are provided in a mutually mirrored orientation relative to a respective set of two blanking stations (BS5, BS6; resp. B7, B8) of the directly adjacent one of two innermost rows of the said four rows.

## Patentansprüche

1. Feinstanzvorrichtung (60), umfassend acht Stanzstationen (BS1-8) für das Feinstanzen von Quersegmenten (10) aus einem Basismaterial (50) für einen Antriebsriemen (6), wie zum Beispiel in einem stufenlosen Getriebe eingesetzt, wobei jede Stanzstation (BS1-8) mindestens mit einem Schneidstempel (30) mit einem gegenüber platzierten Gegenstempel (40) und mit einer Stanzmatrize (80) versehen ist, in der mindestens der Gegenstempel (40) enthalten ist, wobei die Stanzstationen (BS1-8) in vier zueinander parallelen Reihen vorgesehen sind, die jeweils zwei der acht Stanzstationen (BS1-8) enthalten, wobei die beiden Stanzstationen (BS1, BS2) einer der beiden äußersten Reihen der vier Reihen gegenüber den beiden Stanzstationen (BS3, BS4) der anderen der beiden äußersten Reihen der vier Reihen vorgesehen sind, und wobei die beiden Stanzstationen (BS5, BS6) einer der beiden innersten Reihen der vier Reihen gegenüber den beiden Stanzstationen (BS7, BS8) der anderen der beiden innersten Reihen der vier Reihen vorgesehen sind, **dadurch gekennzeichnet, dass** die vier Stanzstationen (BS1-4) der beiden äußersten Reihen der vier Reihen und die vier Stanzstationen (BS5-8) der beiden innersten der vier Reihen mit einem gegenseitigen Versatz in Längsrichtung der vier Reihen versehen sind.

2. Feinstanzvorrichtung (60) nach Anspruch 1, **dadurch gekennzeichnet, dass** die zu bildenden Quersegmente (10) in einer senkrecht zur Längsrichtung der vier Reihen verlaufenden Richtung asymmetrisch geformt werden und dass jeweilige Paare von gegenüber vorgesehenen Stanzstationen auch in einer spiegelbildlichen Ausrichtung zueinander vorgesehen sind.

3. Feinstanzvorrichtung (60) nach Anspruch 1 oder 2, **dadurch gekennzeichnet, dass** jeder Satz von zwei Stanzstationen (BS1, BS2 bzw. B3, B4) einer der beiden äußersten Reihen der vier Reihen in einer spiegelbildlichen Ausrichtung zueinander bezüglich eines jeweiligen Satzes von zwei Stanzstationen (BS5, BS6 bzw. B7, B8) der direkt benachbarten der beiden innersten Reihen der vier Reihen vorgesehen ist.

## Revendications

1. Dispositif de découpage fin (60) comprenant huit postes de découpage (BS1 à BS8) pour le découpage fin de segments transversaux (10) à partir d'un matériau de base (50) pour une courroie d'entraînement (6), telle qu'appliquée dans une transmission à variation continue, dont chaque poste de découpage (BS1 à BS8) est au moins pourvu d'un poinçon de découpage (30) ayant un contre-poinçon placé à l'opposé (40) et d'une matrice de découpage (80), dans laquelle au moins le contre-poinçon (40) est contenu, lesquels postes de découpage (BS1 à BS8) sont disposés sur quatre rangées mutuellement parallèles qui contiennent chacune deux des huit postes de découpage (BS1 à BS8), dont les deux postes de découpage (BS1, BS2) de l'une des deux rangées les plus à l'extérieur desdites quatre rangées sont disposés à l'opposé des deux postes de découpage (BS3, BS4) de l'autre des deux rangées les plus à l'extérieur desdites quatre rangées et dont les deux postes de découpage (BS5, BS6) de l'une des deux rangées les plus à l'intérieur desdites quatre rangées sont disposés à l'opposé des deux postes de découpage (BS7, BS8) de l'autre des deux rangées les plus à l'intérieur desdites quatre rangées, **caractérisé en ce que** les quatre postes de découpage (BS1 à BS4) des deux rangées les plus à l'extérieur desdites quatre rangées et les quatre postes de découpage (BS5 à BS8) des deux rangées les plus à l'intérieur desdites quatre rangées sont pourvus d'un décalage mutuel dans la direction longitudinale desdites quatre rangées.

2. Dispositif de découpage fin (60) selon la revendication 1, **caractérisé en ce que** les segments transversaux (10) qui doivent être ainsi formés sont formés de façon asymétrique dans une direction perpendiculaire à la direction longitudinale desdites quatre rangées et **en ce que** des paires respectives de postes de découpage disposés à l'opposé sont également disposées dans une orientation mutuellement en miroir.

3. Dispositif de découpage fin (60) selon la revendication 1 ou 2, **caractérisé en ce que** chaque ensemble de deux postes de découpage (BS1, BS2 ; B3, B4 respectifs) de l'une des deux rangées les plus à l'extérieur desdites quatre rangées sont disposés dans une orientation mutuellement en miroir par rapport à un ensemble respectif de deux postes de découpage (BS5, BS6 ; B7, B8 respectifs) de la rangée directement adjacente de deux rangées les plus à l'intérieur desdites quatre rangées.
